# EUROPÄISCHE PATENTSCHRIFT

(11) **EP 0 480 955 B1**
(45) Veröffentlichungstag und Bekanntmachung des Hinweises auf die Patenterteilung: **02.11.1994**
(21) Anmeldenummer: 90909698.4
(22) Anmeldetag: 29.06.1990
(51) Int. Cl.: F16H 37/04

(54) **VIELSTUFIGES ZAHNRÄDERWECHSELGETRIEBE**
MULTI-STAGE SPEED-CHANGE TRANSMISSION
BOITE DE VITESSES A PIGNONS ET A ETAGES MULTIPLES

(30) Priorität: 05.07.1989 DE 3922053
(43) Veröffentlichungstag der Anmeldung: 22.04.1992
(73) Patentinhaber: ZF FRIEDRICHSHAFEN Aktiengesellschaft, 88038 Friedrichshafen (DE)
(72) Erfinder: MÜLLER, Franz, D-7990 Friedrichshafen (DE); POHLENZ, Jürgen, D-7990 Friedrichshafen (DE); LEHLE, Hubert, D-7996 Meckenbeuren (DE); BAUR, Erwin, D-7990 Friedrichshafen (DE); SIMON, Herbert, D-7990 Friedrichshafen (DE)
(86) Internationale Anmeldenummer: EP9001040
(87) Internationale Veröffentlichungsnummer: WO9100444

(56) Entgegenhaltungen:
- AU-B- 548 398
- DE-A- 2 645 907
- DE-A- 2 645 957
- GB-A- 2 179 413
- US-A- 4 539 856
- US-A- 4 757 726
- K.T. Renius: "Traktoren", Verlagsunion Agrar, 1985, Seite 93

## Beschreibung

Die Erfindung bezieht sich auf ein vielstufiges Zahnräderwechselgetriebe entsprechend den im Oberbegriff von Anspruch 1 aufgeführten Merkmalen.

Zahnräderwechselgetriebe nach dem Gattungsbegriff sind allgemein bekannt und werden bei Traktoren und bestimmten Baufahrzeugen eingesetzt. Derartige Getriebe müssen für die verschiedensten Arbeitseinsätze stets eine geeignete Geschwindigkeit zur Verfügung stellen, da der Geschwindigkeit eine zentrale Bedeutung für die Produktivität zukommt. Eine Übersicht über die praktischen Arbeitsgeschwindigkeiten beim Einsatz von Traktoren findet sich bei K. T. Renius, Traktoren, Verlagsunion Agrar, 1985, Seite 93.

Ein weiteres vielstufiges Zahnräderwechselgetriebe ist aus der DE-A 26 45 907 bekanntgeworden. Es besteht im wesentlichen aus einer Eingangsgruppe, einem Zwischengetriebe und einer Hauptgruppe. Die Festräder der feingestuften Eingangsgruppe sind auf der Eingangswelle angeordnet und kämmen mit Losrädern auf einer ersten Vorgelegewelle. Den Losrädern sind Schaltkupplungen zugeordnet. In Verlängerung zur ersten Vorgelegewelle liegt die Antriebswelle der Hauptgruppe. Auf dieser Antriebswelle befinden sich Los- und Festräder, die mit Fest- bzw. Losrädern auf der Abtriebswelle in kämmender Verbindung stehen. Das Zwischengetriebe enthält Zahnradsätze für ein Kriechganggetriebe und ein Wendegetriebe. Die Gangstufen des Kriechganggetriebes können wahlweise zusammen mit dem Wendegetriebe geschaltet sein.

Der vorliegenden Erfindung liegt die Aufgabe zugrunde, ein der Eingangs- und Hauptgruppe gemeinsames Getriebegehäuse konstruktiv so auszubilden, daß zwischen diesen Teilgetrieben eine Anfahrkupplung eingebaut und - bedarfsweise - ein zusätzlicher Gang bereitgestellt werden kann.

Zur Lösung der gestellten Aufgabe werden die im Anspruch 1 aufgeführten Merkmale vorgeschlagen.

Mit der vorgeschlagenen Ausbildung des Getriebegehäuses ist sowohl der Einbau einer Anfahrkupplung als auch einer Schaltkupplung zwischen Gehäusezwischenwänden des Getriebegehäuses möglich. Durch die Formschlußkupplung zwischen der Vorgelegewelle der Eingangsgruppe und der Primärwelle der Anfahrkupplung besteht die Möglichkeit, ein Zwischengetriebe vorzusehen, ohne daß der grundsätzliche Aufbau des Zahnräderwechselgetriebes geändert wird. Die Zwischenachse dient einerseits der Lagerung des Doppelzahnrades und andererseits der axialen Abstützung der ersten und zweiten Gehäusezwischenwand. Die Zwischenachse kann Ölkanäle aufweisen, die von der Haupt- zur Eingangsgruppe und umgekehrt führen.

Wird anstelle einer Wellenmuffe eine Klauen- oder Synchronkupplung eingesetzt, ist es leicht möglich, der Anfahrkupplung eine zusätzliche Gangstufe vorzuschalten.

Bei einer bevorzugten Ausführungsform des Zahnräderwechselgetriebes nach der Erfindung ist das Zwischengetriebe ein Schnellganggetriebe (Overdrive) mit einem eingangsseitigen Festrad, welches abtriebsseitig auf der Vorgelegewelle der Eingangsgruppe sitzt und etwa den Durchmesser des Eingangs-Festrades auf der Eingangswelle der Eingangsgruppe aufweist, wobei das mit dem Festrad kämmende andere Zahnrad des auf der Zwischenachse umlaufenden Doppelzahnrades höchstens 0,6mal so groß wie das eine Zahnrad des Doppelzahnrades ist.

Nachfolgend wird ein Ausführungsbeispiel der Erfindung unter Bezugnahme auf die Zeichnungen näher beschrieben.
Es zeigen:
- Fig. 1: ein vielstufiges Zahnräderwechselgetriebe in schematischer Darstellung;
- Fig. 2: eine beispielhafte konstruktive Ausführung einer Anfahrkupplung mit einem vorgeschalteten Zwischengetriebe, das als Schnellgang ausgelegt ist.

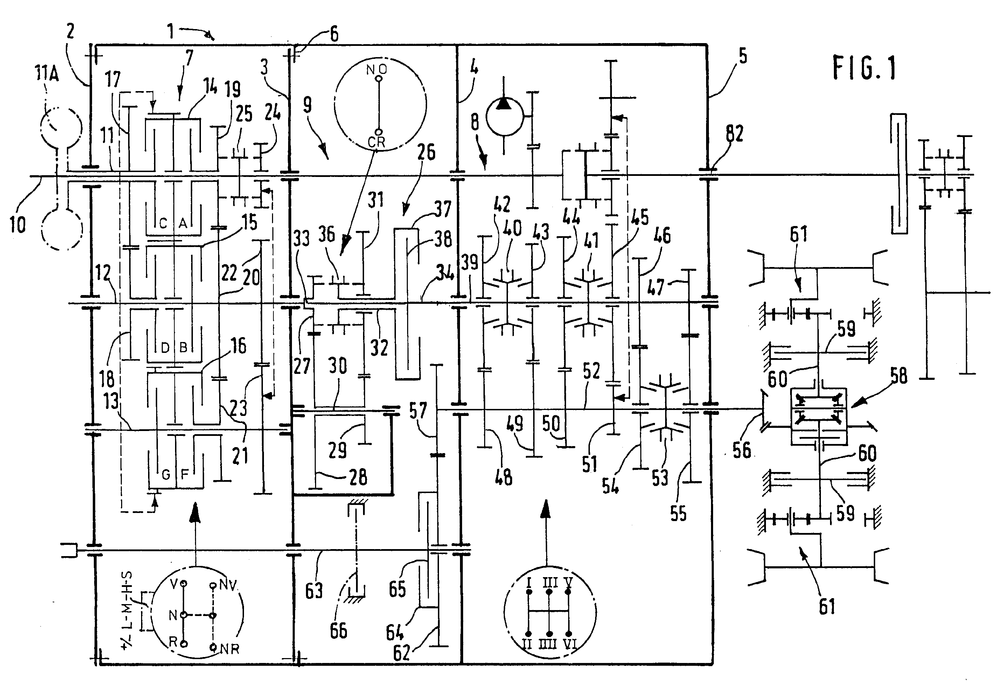

In Fig. 1 ist ein gemeinsames Getriebegehäuse 1 mit einem motorseitigen Deckel 2 und einer ersten und zweiten Gehäusezwischenwand 3 und 4 sowie eine Rückwand 5 des Getriebegehäuses 1 schematisch dargestellt. Die aus dem Getriebegehäuse nach dem Lösen von einem Randflansch 6 durch den Deckel 2 herausnehmbare Gehäusezwischenwand 3 erlaubt den Zugriff zu den Bauteilen einer Eingangsgruppe 7, ohne eine hinter der zweiten Gehäusezwischenwand 4 gelegene Hauptgruppe 8 öffnen zu müssen. Baulich und trieblich zwischen Eingangsgruppe 7 und Hauptgruppe 8 ist ein Freiraum für ein Zwischengetriebe 9 vorgesehen, welches im Beispiel aus einer Kriechgangstufe besteht. Die Hauptgruppe 8 kann damit insbesondere zwischen Rückwand 5 und Zwischenwand 4 völlig fertig montiert werden, ehe ein Zwischengetriebe 9 oder die Eingangsgruppe 7 installiert werden.
Da die Einbaugruppen-Geometrien so gewählt sind, daß wahlweise Lastschalt-Kupplungen A, B, C, D, F, G oder Synchronkupplungen zum Einsatz gelangen können, ist die endgültige Ausrüstungs-Entscheidung erst in der Montage-Endphase nötig.
Die Eingangsgruppe 7 weist außer einer Eingangswelle 11 noch zwei weitere parallele Wellen auf, und zwar eine die Hauptgruppe 8 antreibende erste Vorgelegewelle 12 und eine Umkehrwelle 13 für Rückwärtsfahrt. Auf jeder dieser Wellen befindet sich je eine lastschaltbare Doppel-Lamellenkupplung CA, DB und GF an sich gleicher Bauart und Größe, deren Glocken 14, 15, 16 auf den jeweiligen Wellen drehbar gelagert sind und welche über äußere Verzahnungen miteinander direkt bzw. indirekt in Eingriff stehen, und zwar steht die Glocke 14 sowohl mit den Glocken 15 und 16 ständig in Eingriff, nicht aber die Glocke 15 mit Glocke 16. Zu diesem Zwecke sind die Wellen der Eingangsgruppe 7 in einem gleichseitigen Dreieck angeordnet und die Außenverzahnung der Glocke 15 läuft an der Außenverzahnung der Glocke 16 leer vorbei, kämmt aber, wie auch die Außenverzahnung der Glocke 16, mit der Außenverzahnung der Glocke 14.

Jede Glocke ist durch einen sie auf ihrer Nabe tragenden radialen Steg axial in zwei gleiche Reiblamellenpakete unterteilt. Durch hier nicht besonders gekennzeichnete separate Hydraulikkolben sind diese einzeln oder gemeinsam mittels Druckmittelbeaufschlagung gegen Federkräfte aktivierbar.
Die den Innenlamellenträger der Kupplung C tragende Hohlwelle ist die Eingangswelle 11, welche über einen beliebigen Schwingungsdämpfer 11A von der Hauptantriebswelle 10 angetrieben wird, sobald der nicht gezeigte Motor läuft. Die Eingangswelle 11 nimmt dabei ein den Durchmesser der Glocke 14 überragendes und dieser antriebsseitig vorgeordnetes Losrad 17 in Drehrichtung mit, welche ein der Glocke 15 antriebsseitig vorgelagertes Losrad 18 und den damit durch eine gemeinsame Nabe verbundenen Innenlamellenträger der Kupplung D auf der Vorgelegewelle 12 mitnimmt. Abtriebsseitig ist der Glocke 14 ein mit deren Innenlamellenträger durch eine gemeinsame Nabe verbundenes weiteres Losrad 19 vorgeordnet, das in Eingriff steht mit einem den Durchmesser der Glocke 15 überragenden Festrad 20 auf der in die Hauptgruppe 8 weiterführende Vorgelegewelle 12 bzw. mit dieser koaxialen Primärwelle 32. Das Festrad 20 kämmt dabei mit einem auf der Umkehrwelle 13 abtriebsseitig von der Glocke 16 vorgesehenen und mit deren Innenlamellenträger über eine gemeinsame Nabe verbundenen kleineren Losrad 21. Auf der Vorgelegewelle 12 ist dem Festrad 20 abtriebsseitig noch ein weiteres, etwas kleineres Festrad 22 nachgeordnet, das in Eingriff steht mit einem auf der Umkehrwelle 13 befestigten und dem Losrad 21 abtriebsseitig nachgeordneten Festrad 23 mit einem den Durchmesser der Glocke 16 überragenden Durchmesser. Mit diesem Festrad 23 kämmen im Beispiel weiterhin noch ein dem abtriebsseitigen Losrad 19 der Glocke 14 auf der Hauptantriebswelle 10 nachgeordnetes kleineres Losrad 24, welches mittels einer auf der Hauptantriebswelle 10 drehfesten Schiebemuffe 25 und entsprechenden Kupplungsverzahnungen in Formschluß bringbar ist. Die gleiche Schiebemuffe 25 kann auch einen Formschluß herstellen von der Hauptantriebswelle 10 zum Losrad 19 nach der abtriebsseitigen Glocke 14. Damit wird eine entweder vor- oder rückwärts, je nach Stellung OV/OR, betreibbare Triebverbindung zur Umgehung der von funktionierenden Strom- und Hydraulikversorgungen abhängigen Lastschaltkupplungen erreicht, wodurch Anschleppen oder ein mechanischer Not-Fahrbetrieb über die Gänge der Hauptgruppe 8 möglich wird. Diese Einrichtung mit den Festrädern 22, 23 und dem Losrad 24 ist bei Verwendung von Formschluß- bzw. Synchronkupplungen in der Eingangsgruppe 7 nicht erforderlich, weil dann ein Strom- oder HydraulikAusfall nicht zur Totalblockierung der Kupplungen führen kann.

Das im Beispiel erfindungsgemäß axial zwischen Ein gangsgruppe 7 und einer der Hauptgruppe 8 unmittelbar vorgeordneten Anfahr- und Trennkupplung 26 angeordnete Zwischengetriebe 9 kann auf Wunsch ohne Gehäuseänderungen weggelassen werden, wenn kein besonderer Wert auf einen Kriech- oder Schnellgang (Overdrive) gelegt wird. Das Zwischengetriebe besteht im ersteren Falle im wesentlichen aus einem kleinen Festrad 27 abtriebsseitig von der ersten Gehäusezwischenwand 3 auf der ersten Vorgelegewelle 12, welches ein Doppelzahnrad 28, 29 auf einer zur Anfahr- und Trennkupplung 26 parallelen Zwischenwelle 30 treibt, deren Enden in der ersten und der zweiten Gehäusezwischenwand 3, 4 gelagert sind. Das Doppelzahnrad 28, 29 hat im Falle des Kriechganges ein großes antriebsseitiges und ein kleines abtriebseitiges Zahnrad. Das letztere treibt hier ein großes Losrad 31 auf der Primärwelle 32 der Anfahr- und Trennkupplung 26. Diese Primärwelle 32 fluchtet sowohl koaxial zur Vorgelegewelle 12, mit der es ein Axiallager 33 gemeinsam hat, als auch mit der die Sekundärwelle der Anfahrkupplung 26 bildenden Antriebswelle 34 der Hauptgruppe 8. Dabei ist die Primärwelle 32 mittels eines weiteren Lagers vor dem Innenlamellenträger der Anfahr- und Trennkupplung 26 innerhalb deren Gehäuse ein weiteres Mal gelagert bzw. axial abgestützt. Axial zwischen Festrad 27 und Losrad 31 befindet sich dann eine mit der Primärwelle 32 drehfeste Schiebemuffe 36 und auf den ihr zugewandten Innenflächen des Fest- und Losrades 27, 31 entsprechende Kupplungsverzahnungen. Damit kann die Schiebemuffe 36 bei Eingriff in das Festrad 27 einen Direktdurchtrieb von dort in die Primärwelle 32 ohne Über- bzw. Untersetzung oder - bei Eingriff in das Losrad 31 - einen durch die Zwischenwelle 30 gehenden über- bzw. untersetzten Durchtrieb bewirken, mit dem alle Gangsprünge des Zahnradwechselgetriebes im gewählten Verhältnis vergrößert bzw. verkleinert werden.

Anstelle der vorgeschilderten Kriechgang-Untersetzung kann an der gleichen Stelle auch eine Schnellgang-Übersetzung (Overdrive) vorgesehen werden. Dazu muß das Festrad 27 allerdings groß und das antriebsseitige Zahnrad klein sowie das nachfolgende Zahnrad des Doppelzahnrades 28, 29 groß und das Losrad 31 klein sein. Die Schiebemuffe 36 ist dann vorteilhafterweise eine Synchronkupplung, um den beim Umschalten meistens herrschenden hohen Drehzahlen gerecht zu werden.
Die Primärwelle 32 treibt im Beispiel direkt die Glocke 37 der Anfahr- und Trennkupplung 26, welche hier als Außenlamellenträger einer bei Betätigung zwangsgekühlten, nassen Bremse mit Innenlamellen 38 auf der Sekundärwelle gestaltet ist. Diese Sekundärwelle ist im Beispiel das antriebsseitige, aus der zweiten Gehäusezwischenwand 4 herausragende Ende der Antriebswelle 39 der Hauptgruppe 8. Auf dieser Antriebswelle sind zwei Doppel-Synchronkupplungen mit von ihren angetriebenen Muffenträgern 40, 41 mitnehmbaren beidseitigen Losrädern 42, 43 und 44, 45 sowie zwei jeweils benachbarte Festräder 46, 47 angeordnet. Die Losräder 42 bis 45 kämmen dabei mit Festrädern 48, 49, 50, 51 auf einer als Antriebswelle 52 der Hauptgruppe 8 dienenden zweiten Vorgelegewelle, auf deren einem Ende sich noch eine dritte Synchronkupplung mit drehfestem Muffenträger 53 und zugeordneten Losrädern 54, 55 befindet, welche mit den beiden Festrädern 46, 47 auf der Antriebswelle 39 kämmen. Die Antriebswelle 52 hat im Beispiel an ihren beiden Enden je ein Abtriebsrad 56, 57.
Das abtriebsseitige, aus der Rückwand 5 herausragende Wellenende, auf dem das Abtriebsrad 56 sitzt, treibt ein Kegelrad, und dieses treibt ein Tellerrad eines sperrbaren Achsdifferentiales 58, das einerseits mit Bremsen 59 versehene Hinterachswellen 60 mit Radkopfplanetengetrieben 61 antreibt. Das antriebsseitig aus der zweiten Gehäusezwischenwand 4 hervorragende Abtriebsrad 57 ist ein Stirnrad, das ein Losrad 62 auf einer VorderachsAntriebswelle 63 antreibt. Das Losrad 62 nimmt auch die Glocke einer als Außenlamellenträger gestalteten Vorderachs-Zuschaltkupplung 64 mit. Deren Innenlamellenträger 65 ist mit der Vorderachs-Antriebswelle 63 drehfest, welche unterhalb der Eingangsgruppe 7 verlaufend, an deren Stirnseite wieder aus dem Deckel 2 austritt. Dabei verbleibt zumindest bei nicht allzu großem Doppelzahnrad 28, 29 im Zwischengetriebe 9 unter demselben noch Platz, um auf der Vorderachs-Antriebswelle 63 abtriebsseitig von der Vorderachs-Zuschaltkupplung 64 noch eine Wellenbremse 66 anzuordnen, welche in diesem Schema nur strichpunktiert angedeutet wurde.

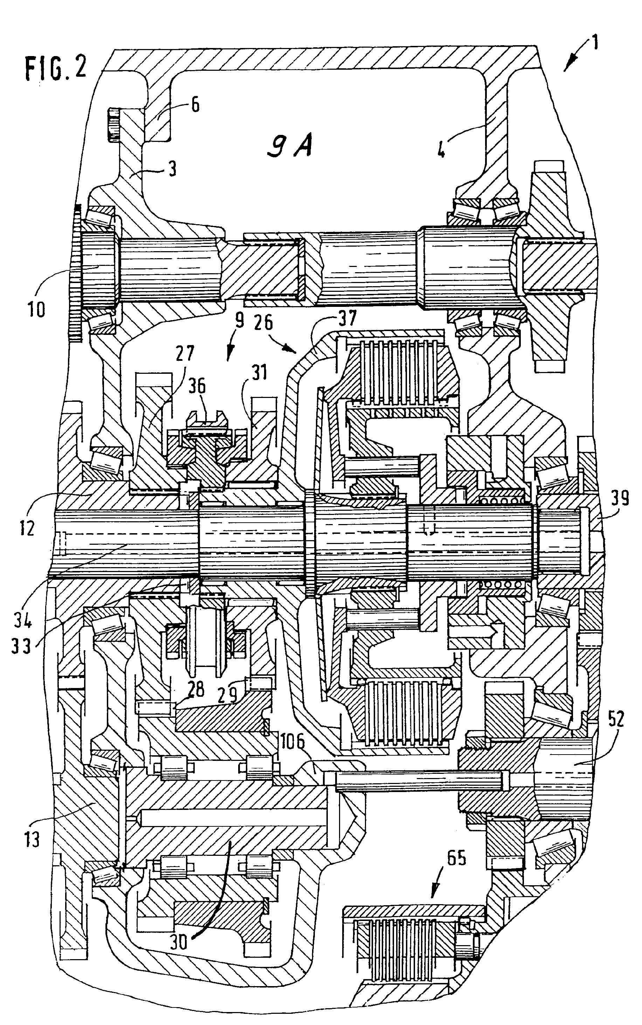

Fig. 2 zeigt ein ins Schnelle übersetzendes Zwischengetriebe 9 (sogenannter Overdrive), das in dem dafür vorgesehenen Freiraum 9A eingebaut ist. Das Festrad 27 hat einen großen Durchmesser, das erste Zahnrad 28 ist klein und das zweite Zahnrad 29 des Doppelzahnrades 28, 29 ist groß. Das Losrad 31 ist wieder klein, und dabei ist die Schiebemuffe 36 vorzugsweise statt einer einfachen Klauenkupplung mit einer Synchronschaltkupplung kombiniert. Mit dieser Synchronschaltkupplung lassen sich höhere Drehzahlunterschiede bequemer und geräuscharmer überbrücken. Im gezeigten Beispiel nach Fig. 2 ist außerdem die Vorderachs-Wellenbremse 66 weggelassen bzw. an die Innenseite des Deckels 2 verlegt, um radial Platz zu schaffen für das größere zweite Zahnrad des Doppelzahnrades 28, 29. Die schalenförmige Ausbuchtung für das Doppelzahnrad 28, 29 muß dann ebenfalls entsprechend angepaßt sein, so daß für die in das Getriebegehäuse 1 eingeflanschte erste Gehäusezwischenwand 3 eine Sonderform beim Einsatz von Zwischengetrieben 9 mit einem Übersetzungsverhältnis ins Schnelle vorzusehen ist, wenn man nicht bereits die Gehäusezwischenwand 3 so gestaltet, daß sowohl die Kriechgang- als auch die Overdrive-Version des Zwischengetriebes 9 genügend radialen Platz haben.

## Patentansprüche

1. Vielstufiges Zahnräderwechselgetriebe,
- mit einer Anfahrkupplung (26), die in einem Getriebegehäuse (1) angeordnet ist und eine Primärwelle (32) aufweist, und mehreren Getriebegruppen (7, 8) in Vorgelegebauweise,
- von denen eine grobstufige Hauptgruppe (8) mit Synchronschaltkupplungen (40, 41, 53) als Bereichsgruppe
- und eine dieser vorgeschaltete, feinstufige Eingangsgruppe (7) als Splitgruppe zur Feinabstimmung der Drehzahlen bzw. Geschwindigkeiten innerhalb eines Drehzahlbereiches dienen,
- wobei eine Vorgelegewelle (12) der Eingangsgruppe (7) axial fluchtend zu einer Antriebswelle (39) der Hauptgruppe (8) liegt
- und wobei eine ein Eingangs-Festrad (17) aufweisende Hauptantriebs- bzw. Eingangswelle (10, 11) gegenüber der Vorgelegewelle (12) der Eingangsgruppe parallel versetzt angeordnet und
- mit einer Zapfwelle (73) trieblich koppelbar ist,
dadurch **gekennzeichnet**,
- daß axial zwischen einer Gehäusezwischenwand (3) des Getriebegehäuses abtriebsseitig von der Eingangsgruppe (7) und vor der Anfahrkupplung (26) ein Freiraum (9A) zum Einbau eines Zwischengetriebes (9) vorgesehen ist
- und daß in diesem Freiraum eine eine Schiebemuffe (36) aufweisende Formschlußkupplung montiert ist, welche ein Axiallager (33) zwischen der Vorgelegewelle (12) der Eingangsgruppe und der Primärwelle (32) radial überdeckt
- und wobei sich etwa auf Höhe einer Umkehrwelle (13) der Eingangsgruppe eine Zwischenachse (30) mit Arretierung in der Gehäusezwischenwand (3) befindet, auf welcher Zwischenachse (30) ein Doppelzahnrad (28, 29) des Zwischengetriebes (9) gelagert ist, dessen eines Zahnrad (29) mit einem Losrad (31) abtriebsseitig von der Schiebemuffe (36) in Eingriff steht und dessen anderes Zahnrad (28) mit der Eingangsgruppe trieblich gekoppelt ist.

2. Getriebe nach Anspruch 1, dadurch **gekennzeichnet**,
- daß das Zwischengetriebe (9) ein Schnellganggetriebe (Overdrive) ist mit einem eingangsseitigen Festrad (27), welches abtriebsseitig auf der Vorgelegewelle (12) der Eingangsgruppe (7) sitzt und etwa den Durchmesser des Eingangs-Festrades (17) auf der Eingangswelle (10/11) der Eingangsgruppe (7) aufweist
- und daß das mit dem Festrad (27) kämmende andere Zahnrad (28) des auf der Zwischenachse (30) umlaufenden Doppelzahnrades (28/29) höchstens etwa 0,6mal so groß wie das eine Zahnrad (29) des Doppelzahnrades ist.

## Claims

1. Multi-stage speed change gearbox,
- with a starting-off clutch (26) located in a transmission housing (1) which has a primary shaft (32) and several gear groups (7, 8) in a countershaft arrangement,
- of which one is a large ratio main group (8) with synchromesh clutches (40, 41, 53) and serves as a rangechange group,
- and a fine ratio input group (7) mounted ahead of the main group (8) serving as a splitter group for precisely matching the speeds of rotation or speeds within a speed range,
- whereby a countershaft (12) of the input group (7) is located axially flush with an input shaft (39) of the main group (8),
- and whereby a main drive or input shaft (10, 11) having a fixed input gear (17) is mounted in an offset parallel arrangement to the countershaft (12) of the input group and
- is in a driven connection with a stub shaft (73),
**characterized** in that,
- a chamber (9A) for installing an intermediate gearbox (9) is provided axially between an intermediate housing wall (3) of the transmission housing on the output end of the input group (7) and ahead of the starting-off clutch (26),
- a positive engagement coupling with a sliding sleeve (36) is fitted in this chamber in such a manner that the positive engagement coupling radially covers an axial bearing (33) between the countershaft (12) of the input group and the primary shaft (32),
- and whereby an intermediate axle (30) is mounted in the intermediate housing wall (3) at about the height of a change-over shaft (13) of the input group, with a double gear (28, 29) of the intermediate gearbox (9) mounted on the intermediate axle (30), whereby one gear (29) of the intermediate gearbox (9) is in mesh with an idler gear (31) on the output end of the sliding sleeve (36) and the other gear (28) of the intermediate gearbox (9) is in a driven connection with the input group.

2. Gearbox in accordance with Claim 1,
**characterized** in that,
- the intermediate gearbox (9) is an overdrive gearbox with a fixed gear (27) on its input end located on the output end on the countershaft (12) of the input group (7) and having approximately the diameter of the fixed input gear (17) on the input shaft (10/11) of the input group (7),
- and that the other gear (28) of the double gear (28/29) rotating on the intermediate axle (30) which is in mesh with the fixed gear (27) is at most approximately 0.6 times as large as a gear (29) of the double gear.

## Revendications

1. Boîte de vitesses à engrenages à étages multiples,
- comportant un embrayage de démarrage (26), disposé dans un carter de boîte (1) et pourvu d'un arbre primaire (32), et plusieurs groupes d'engrenages (7, 8) du type à renvoi,
- dont un groupe principal (8) à étagement large et à synchroniseurs (40, 41, 53) sert de groupe de changement de domaines
- et un groupe d'entrée (7) à étagement serré, placé en amont du groupe principal, sert de groupe de subdivision pour la sélection fine des régimes ou vitesses à l'intérieur d'un domaine de régime,
- où un arbre de renvoi (12) du groupe d'entrée (7) est aligné axialement avec un arbre d'entraînement (39) du groupe principal (8),
- et où un arbre principal d'entraînement ou d'entrée (10, 11) pourvu d'un pignon fixe d'entrée (17) est parallèle et décalé par rapport à l'arbre de renvoi (12) du groupe d'entrée et
- peut être couplé à un arbre de prise de mouvement (73),
**caractérisée :**
- en ce qu'un espace libre (9A) pour le montage d'une boîte intermédiaire (9) est ménagé axialement entre une cloison intermédiaire (3) du carter, située du côté de sortie du groupe d'entrée (7), et l'embrayage de démarrage (26),
- et en ce que dans cet espace libre est monté un embrayage positif comportant un manchon baladeur (36) et recouvrant radialement un palier axial (33) entre l'arbre de renvoi (12) du groupe d'entrée et l'arbre primaire (32),
- et où un axe intermédiaire (30), fixé à la cloison intermédiaire (3) du carter, se trouve sensiblement au niveau d'un arbre d'inversion (13) du groupe d'entrée et porte par un palier un pignon double (28, 29) de la boîte intermédiaire (9), ce pignon double comprenant un premier pignon (29) qui s'engrène sur un pignon fou (31) situé du côté de sortie du manchon baladeur (36) et un autre pignon (28) qui est entraîné par le groupe d'entrée.

2. Boîte de vitesses selon la revendication 1, **caractérisée** :
- en ce que la boîte intermédiaire (9) est une boîte de surmultiplication (overdrive) pourvue d'un pignon fixe d'entrée (27) qui est monté sur le côté de sortie de l'arbre de renvoi (12) du groupe d'entrée (7) et qui a sensiblement le même diamètre que le pignon fixe d'entrée (17) monté sur l'arbre d'entrée (10/11) du groupe d' entrée (7),
- et en ce que l'autre pignon (28) du pignon double (28/29) tournant sur l'axe intermédiaire (30), à savoir le pignon qui s' engrène sur le pignon fixe (27), a un diamètre valant approximativement 0,6 fois celui du premier pignon (29) du pignon double.
